(19) 

Europäisches
Patentamt
European
Patent Office
Office européen
des brevets

(11) **EP 1 933 186 A1**

(12) **EUROPEAN PATENT APPLICATION**
published in accordance with Art. 153(4) EPC

(43) Date of publication:
**18.06.2008 Bulletin 2008/25**

(21) Application number: **06811065.9**

(22) Date of filing: **02.10.2006**

(51) Int Cl.:
*G02B 21/00* (2006.01)          *G02B 26/06* (2006.01)
*G02B 27/58* (2006.01)

(86) International application number:
**PCT/JP2006/319717**

(87) International publication number:
**WO 2007/043382 (19.04.2007 Gazette 2007/16)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.10.2005 JP 2005295028**

(71) Applicant: **NIKON CORPORATION
Tokyo 100-8331 (JP)**

(72) Inventors:
• **OUCHI, Yumiko**
**Chiyoda-ku, Tokyo 1008331 (JP)**
• **OSAWA, Hisao**
**Chiyoda-ku, Tokyo 1008331 (JP)**

(74) Representative: **Whitlock, Holly Elizabeth Ann et al
R G C Jenkins & Co,
26 Caxton Street
London SW1H 0RJ (GB)**

(54) **MICROSCOPE AND IMAGE GENERATION METHOD**

(57)     The present invention has an object to provide a microscope apparatus based on structured illumination that can obtain an excellent super-resolved image by using even an optical system in which distortion aberration remains. Therefore, the microscope apparatus according to the present invention includes an illuminating optical system (LS1) for illuminating a sample (10) with light from a light source (1), a modulating unit (3) that is disposed in the illuminating optical system (LS1) and spatially modulates the light from the light source (1), an image-forming optical system (LS2) for forming an image of a modulated image from the sample illuminated with the spatially modulated light, an imaging unit (12) for picking up the demodulated image, a correcting unit (13) for correcting distortion of the modulated image due to at least one of the illuminating optical system (LS1) and the image-forming optical system (LS2), and an image generating unit (13) for generating an image of the sample from the modulated image corrected by the correcting unit.

[Fig. 1]

EP 1 933 186 A1

**Description**

*TECHNICAL FIELD*

The present invention relates to a microscope apparatus and an image generation method.

*BACKGROUND ART*

Recently, a super-resolution technology for observing a specimen with a higher solution than the resolution of a microscope optical system has been proposed (Patent Document 1, etc.). The Patent Document 1 discloses a method for exposing a sample to structured-illumination to generate a modulated image, obtaining plural modulated images while changing the phase of the structured-illumination, and demodulating these plural modulated images by a linear calculation, thereby obtaining a super-resolved image. In general, the linear calculation can be increased in speed as compared with a non-linear calculation, and thus it enables real-time observation or observation close to the real-time observation.
Patent Document 1: Japanese Unexamined Patent Application Publication No. Hei 11-242189

*DISCLOSURE OF THE INVENTION*

*PROBLEMS OT BE SOL VED BY THE INVENTION*

However, this calculation is based on the premise that the spatial frequency and the amount of phase change of the structured illumination are uniform. On the other hand, the real microscope optical system has an aberration, and thus it is difficult to make the spatial frequency and the amount of phase change of the structured illumination uniform. Therefore, the conventional method may induce a demodulating error and generate noise on the super-resolved image with some probability.
Therefore, the present invention has an object to provide a microscope apparatus based on structured illumination and an image generation method with which an excellent super-resolved image can be obtained by using even an optical system having distortion aberration remaining therein.

*MEANS FOR SOL VING THE PROBLEMS*

A microscope apparatus of the present invention is characterized by including: an illuminating optical system that illuminates a sample with light from a light source; a modulating unit that is disposed in the illuminating optical system and spatially modulates the light from the light source; an image-forming optical system that forms a modulated image from the sample illuminated with the spatially modulated light; an imaging unit that picks up the modulated image; a correcting unit that corrects distortion of the modulated image due to at least one of the illuminating optical system and the image-forming optical system; and an image generating unit that generates an image of the sample from the modulated image corrected by the correcting unit.

The modulating unit preferably includes a grating and a grating-modulating unit that modulates the light by moving the grating.
Furthermore, the correcting unit preferably carries out the correction on the basis of data of distortion aberration of at least one of the illuminating optical system and the image-forming optical system.
The correcting unit preferably carries out the correction on the basis of at least one of actual measurement data and design data of the distortion aberration.

The microscope apparatus according to the present invention is preferably further equipped with a recorrecting unit that corrects the distortion of the image of the sample.
Furthermore, the recorrecting unit preferably carries out the correction on the basis of the data of the distortion aberration of the image-forming optical system.
Furthermore, the recorrecting unit preferably carries out the correction on the basis of at least one of the actual data and the design data of the distortion aberration.

According to the present invention, an image generating method that generates a sample image through an image calculating procedure of an obtained image by illuminating a sample with spatially modulated illumination light, and forming an image of light from the sample illuminated with the illumination light is characterized by including: a correcting step that corrects distortion of the obtained image due to an illuminating optical system and an image-forming optical system, and an image generating step that generates an image of the sample from the corrected image.

***EFFECT OF THE INVENTION***

According to the present invention, there are implemented a microscope apparatus and an image generating method with which an excellent super-resolved image can be attained even when an optical system having distortion aberration remaining therein is used.

***BRIEF DESCRIPTION OF THE DRAWINGS.***

[Fig. 1] is a schematic diagram showing a microscope apparatus according to an embodiment;
[Fig. 2] is a flowchart showing the operation of a control-calculating unit 13; and
[Fig. 3] is a diagram showing each processing of the control-calculating unit 13.

***BEST MODE FOR CARRYING OUT THE INVENTION***

An embodiment of the present invention will be described hereunder. This embodiment corresponds to an embodiment of a microscope apparatus to which a structured illumination method is applied.
First, the construction of the microscope apparatus will be described.

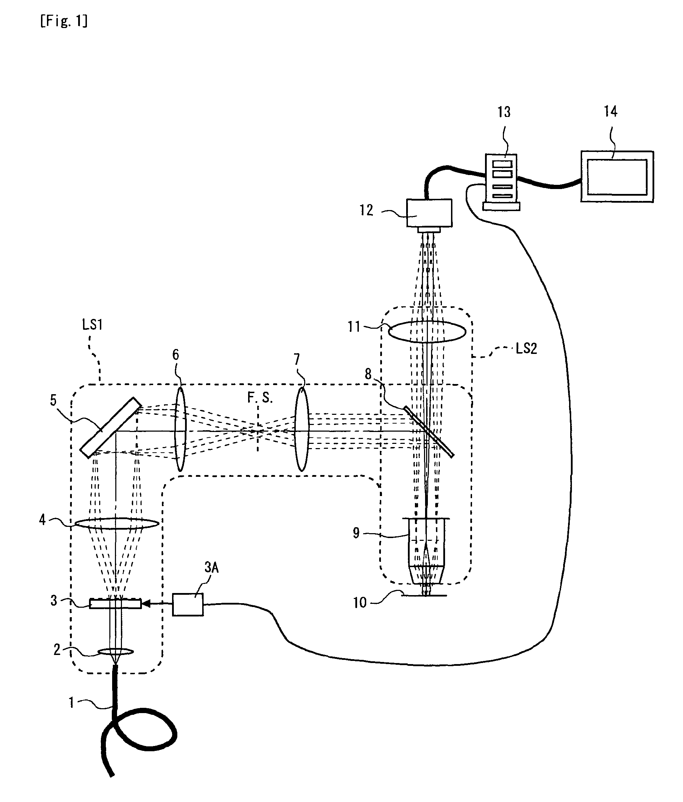

Fig. 1 is a diagram showing the construction of the microscope apparatus. In the microscope apparatus are arranged an optical fiber 1, a collector lens 2, a grating (grating having a uniform lattice pitch) 3, a lens 4, a light deflecting mirror 5, a lens 6, a lens 7, a half mirror 8, an objective lens 9, a sample 10, a secondary objective lens 11, an imaging unit (CCD camera or the like) 12, a control-calculating unit (circuit, a computer or the like) 13, and a display unit 14 as shown in Fig. 1. The collector lens 2, the grating 3, the lens 4, the light deflecting mirror 5, the lens 6, the lens 7, the half mirror 8 and the objective lens 9 constitutes an illuminating optical system LSI for exposing the sample 10 to structure illumination, and the objective lens 9, the half mirror 8 and the secondary objective lens 11 constitutes an image-forming optical system LS2 for forming an image of the sample 10.
Light emitted from a light source (not shown) is guided to the optical fiber 1 to form a secondary light source at the end of the fiber. Illumination light emitted from he secondary light source is converted to collimated light by the collector lens 2 in the illuminating optical system LS1, and then incident to the grating 3 to induce diffraction components of respective orders. The grating 3 is a phase-type or amplitude-type one-dimensional transmission type grating or the like. The phase type is preferable because the diffraction coefficient of $\pm$ 1 st-order diffraction components is high.
The diffraction components of the respective orders occurring in the grating 3 generate spots on a plane conjugated with the pupil of the objective lens 9 by the lens 4. Unnecessary diffraction components other than the $\pm$ 1 st-order diffraction components are removed on the plane, and only the $\pm$ 1 st-order diffraction components are deflected by 90° by the light deflecting mirror 5, forms a sample conjugated plane on a field stop plane F.S. by the lens 6, and then forms spots on the pupil of the objective lens 9 through the lens 7 and the half mirror 8. Particularly, the $\pm$ 1 st-order diffraction components forms the spots at the position opposing each other at the outermost peripheral portion on the pupil. The $\pm$ 1 st-order diffraction components ejected from these spots emitted from these spots become collimated light beams when emitted from the objective lens 9, and form an angle in the neighborhood of the maximum NA of the objective lens 9. The $\pm$ 1 st-order diffraction components are an illumination pattern including an interference fringe of a substantially uniform spatial frequency, and illuminated (structured-illuminated) the surface of the sample 10.
The diffraction components of respective orders of light which is further diffracted from the sample 10 are passed through the objective lens 9, converted to collimated light and then forms an image of the sample 10 through the half mirror 8 by the second objective lens 11. The imaging unit 12 picks up this image to generate image data, and transmits the image data to the control-calculating unit 13. The sample 10 is modulated by the structured illumination, and thus the image of the sample 10 has become "modulated image". This modulated image corresponds to an image achieved by superposing the pattern formed by the $\pm$ 1 st-order diffraction components on the pattern formed by the 0th-order diffraction component while the spatial frequency of the pattern based on the $\pm$ 1 st-order diffraction components is lowered by the amount corresponding to the spatial frequency of the structure illumination.
Here, the microscope apparatus of this embodiment is equipped with a function of obtaining plural image data while changing the phase of the structured illumination (that is, the phase of the illumination pattern on the sample 10). Therefore, an actuator 3A for moving the grating 3 in a direction perpendicular to the lattice lines is provided.
The control-calculating unit 13 controls the actuator 3A and the imaging unit 12 in synchronism with each other, whereby plural image data can be obtained while changing the phase of the illumination pattern. In this case, image data $I_{rj}'$ of N (j represents a phase number, and j=1, 2, 3, ..., N) while the grating 3 is changed by every equal amount, totally the amount corresponding to one pitch of the lattice.
The control-calculating unit 13 conducts the calculation on the obtained image data $I_{rj}'$ of N to obtain the image data of the demodulated image of the sample 10 (the details of the calculation will be described later). The image data of the demodulated image represents a super-resolved image of the sample 10. The image data are transmitted to the display unit 14, and displayed. Programs associated with the control and the calculation are installed in the control-calculating unit 13 in advance. Some or all of the programs are installed in the calculating unit 13 through a storage medium or the Internet.

Next, the details of the calculation of the control-calculating unit 13 will be described.

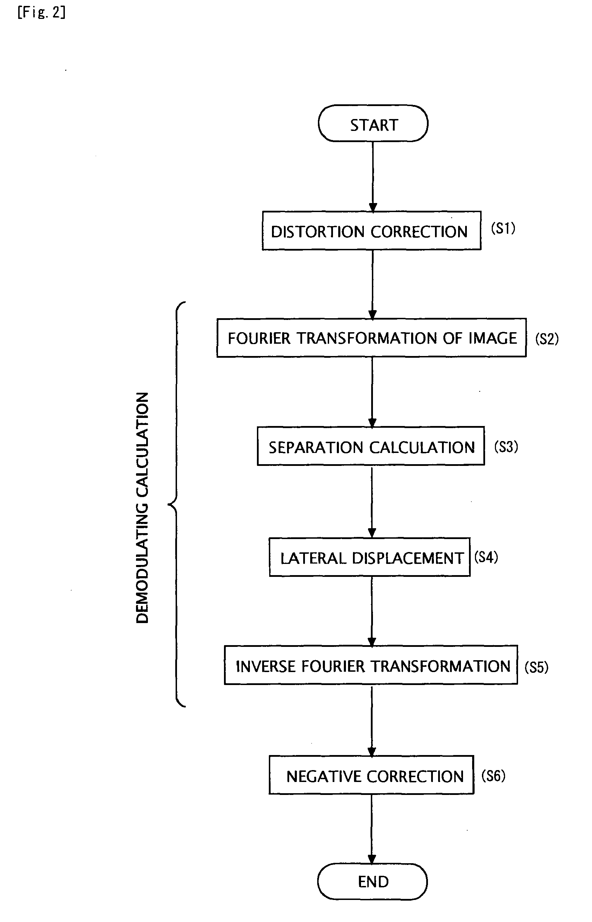

Fig. 2 is a flowchart showing the operation of the control-calculating unit 13.

(Step S 1)

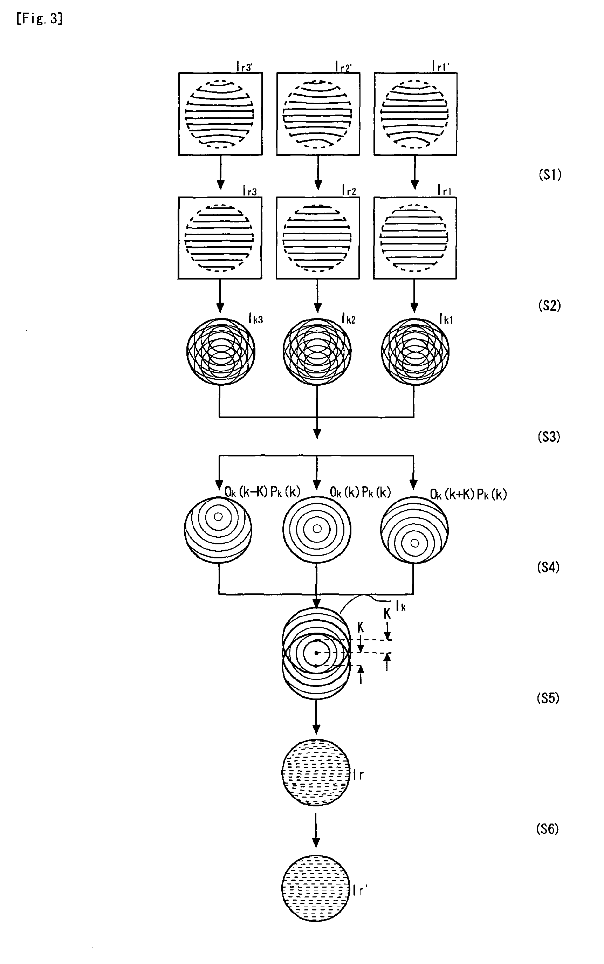

First, the control-calculating unit 13 subjects the image data $I_{rj}'$ of N (j=1, 2, 3, ..., N) to distortion correction to obtain image data $I_{rj}$ of N (j = 1, 2, 3, ..., N). The concept of the processing of this step S1 is shown in Fig. 3(S1). This distortion correction is such a correction that the distortion of the illumination pattern projected to the image data $I_{rj}'$ (j=1, 2, 3, ..., N) is vanished, and it is a common correction among the image data $I_{rj}'$ of N (j=1, 2, 3, ..., N).

Here, the distortion of the illumination pattern occurs due to both the aberration (mainly distortion aberration) when the illuminating optical system LS1 projects the grating 3 onto the sample 10 and the aberration (mainly distortion aberration) when the image-forming optical system LS2 projects the sample 10 onto the imaging unit 12 (onto the imaging plane).

Now, it is assumed that the projecting magnification at which the illuminating optical system LS1 projects the grating 3 onto the sample 10 is represented by $M_1$ and the projecting magnification at which the image-forming optical system LS2 projects the sample 10 onto the imaging unit 12 is represented by $M_2$. Furthermore, it is assumed that a coordinate $X_g$ on the grating 3 is projected to a coordinate $X_s$ on the sample 10 and a coordinate $X_s$ on the sample 10 is projected to a coordinate $X_i$ on the imaging unit 12.

At this time, the relationship between the coordinate $X_g$ on the grating 3 and the coordinate $X_j$ on the imaging unit 12 is ideally represented by the following equation:

$$X_i = M_2 X_s = M_1 M_2 X_g$$

However, the actual illumination system LS1 and image-forming optical system LS2 have distortion aberrations, and thus the relationship of the coordinates $X_g$, $X_s$, $X_i$ is as follows:

$$X_s = M_1 (1 + a_1 X_g{}^2 + a_2 X_g{}^4 + a_3 X_g{}^6 + ...) X_g,$$

$$X_i = M_2 (1 + c_1 X_s{}^2 + c_2 X_s{}^4 + c_3 X_s{}^6 + ...) X_s$$

Accordingly, the relationship between the coordinate $X_g$ on the grating 3 and the coordinate $X_i$ on the imaging unit 12 is represented by the following equation (1):

$$X_i = M_1 M_2 \{1 + (a_1 + a_2) X_g{}^2 + (a_2 + c_2 + a_1 c_1) X_g{}^4 + (a_3 + c_3 + a_1 c_2 + a_2 c_1) X_g{}^6 + ...\} X_g$$

$$= M_1 M_2 (1 + d_1 X_g{}^2 + d_2 X_g{}^4 + d_3 X_g{}^6 + ...) X_g \qquad ... (1)$$

Accordingly, in the distortion correction of this step S1, the control-calculating unit 13 may subject each of the image data $I_{rj}'$ (j=1, 2, 3, ..., N) to coordinate conversion by using the equation (1).

The coefficients $M_1$, $M_2$, $d_1$, $d_2$, $d_3$, ... of the equation (1) are determined from at least one of the design data and the actual measurement data of the illuminating optical system LS1 and the image-forming optical system LS2. As the number of the coefficients $d_1$, $d_2$, $d_3$, ... is larger, the precision of the correction can be enhanced more. If the coefficients are limited to the two coefficients $d_1$ and $d_2$, some degree of effect can be obtained. These coefficients are stored in the control-calculating unit 13 in advance.

In the coordinate conversion processing, a pixel interpolating procedure is preferably carried out as occasion demands so that the conversion error is as small as possible. This is because for example when a step (step of brightness) which has not occurred in the actual modulated image occurs on the corrected image data $I_{rj}$ (j=1, 2, 3, ..., N), a noise pattern appears on the image data of a demodulated image.

According to the above step S1, as shown in Fig. 3(S1), the spatial frequencies of the illumination pattern projected onto the image data $I_{rj}$ (j=1, 2, 3, ..., N) are respectively uniform on the image. Accordingly, the amount of phase change of the illumination pattern is regarded as being uniform on the image.

(step S2)

The control-calculating unit 13 subjects each of the image data $I_{rj}$ (j=1, 2, 3, ..., N) to two-dimensional Fourier Transformation to obtain image data $I_{kj}$ (j=1, 2, 3, ..., N) represented in the wave number space. A subscript [r] representing the coordinate r on the real space is affixed to the data represented in the real space, and a subscript [k] representing the coordinate k on the wave number space is affixed to the data represented in the wave number space.

A two-dimensional FFT method is preferably used for the two-dimensional Fourier Transformation. This is because the two-dimensional FFT method can complete the transformation on even image data having a large data amount such as 1000x1000 pixels within a realistic time.

The concept of the processing of the step S2 is shown in Fig. 3(S2). Each of the image data $I_{kj}$ (j=1, 2, 3, ..., N) represents the Fourier Transformation of the modulated image. Accordingly, on the image data $I_{kj}$ (j=1, 2, 3, ..., N), the spectra of the $\pm$ 1 st-order diffraction components of light emitted from the sample 10 are superposed on the spectrum of the 0th-order diffraction components of the light while being shifted to a lower frequency side (center side) as compared with the actual spectra. As not shown in Fig. 3(S2), the phase of the illumination pattern is different among the image data $I_{kj}$ (j=1, 2, 3, ..., N), and thus an appearing style of the spectrum is different among the diffraction components of the respective orders.

(step S3)

The control-calculating unit 13 applies the image data $I_{kj}$ (j=1, 2, 3, ..., N) to a predetermined calculation equation to separate and extract the 0th-order diffraction component $I_{k0}$, the + 1st-order diffraction component $I_{k+1}$, and the - 1 st-order diffraction component $I_{k-1}$ which are commonly contained in the image data $I_{kj}$ (j=1, 2, 3, ..., N). The concept of the processing of this step S3 is shown in Fig. 3(S3).

Here, if it is assumed that "the spatial frequency of the illumination pattern is uniform on the image", the following would be satisfied.

The spatial frequency of the illumination pattern is represented by K (constant). At this time, when the wave number expression of the actual pattern $O_r(r)$ owned by the sample 10 is represented by $O_k(k)$ and the transfer function (OTF; Optical Transfer Function) of the image-forming optical system LS2 is represented by $P_k(k)$, the L-order diffraction component $I_{kL}$ is represented as follows.

$$O_k (k+LK) P_k (k)$$

Furthermore, the phase (the amount of phase change) of the illumination pattern corresponding to the phase number j is represented as follows irrespective of the coordinate on the image.

$$2\pi j/N$$

Accordingly, the image data $I_{kj}$ corresponding to the phase number j is represented by the following equation (2).

$$I_{kj}(k) = \Sigma_L m_L \exp(2\pi ij/N)O_k(k+LK)P_k(k) \qquad \dots (2)$$

Here, $m_L$ represents the diffraction intensity $m_L$ of the L-order diffraction component $I_{kL}$.

At this time, if the number of the image data $I_{kj}$ is set to 3, three equations are obtained, and three diffraction components $O_k(k)P_k(k)$, $O_k(k+K)P_k(k)$, $O_k(k-K)P_k(k)$ are determined.

Furthermore, if the least squares method is applied on the assumption of N>3, not only these diffraction components are determined, but also the effect of noise contained in each image data $I_{kj}$ (j=1, 2, 3, ..., N) can be suppressed to a small level. In the least squares method, the equation (3) may be used in place of the equation (2).

**[Equation 1]**

$$\begin{bmatrix} \sum_j b_{-1j} I_{kj}(k) \\ \sum_j b_{0j} I_{kj}(k) \\ \sum_j b_{+1j} I_{kj}(k) \end{bmatrix} = \begin{bmatrix} \sum_j b_{-1j}^2 & \sum_j b_{-1j} b_{0j} & \sum_j b_{-1j} b_{+1j} \\ \sum_j b_{0j} b_{-1j} & \sum_j b_{0j}^2 & \sum_j b_{0j} b_{+1j} \\ \sum_j b_{+1j} b_{-1j} & \sum_j b_{+1j} b_{0j} & \sum_j b_{+1j}^2 \end{bmatrix} \begin{bmatrix} O_k(k-K)P_k(k) \\ O_k(k)P_k(k) \\ O_k(k+K)P_k(k) \end{bmatrix} \quad \dots (3)$$

In the equation (3), it is assumed that $b_{Lj} = m_L \exp(L\phi j)$.

The control-calculating unit 13 of the step S3 separates and extracts the diffraction components $O_k(k)P_k(k)$, $O_k(k+K)P_k(k)$, $O_k(k-K)P_k(k)$ by applying the image data $I_{kj}$ (j=1, 2, 3, ..., N) to the simple equation (2) or (3).

(step S4)

The control-calculating unit 13 rearranges the extracted diffraction components $O_k(k)P_k(k)$, $O_k(k+K)P_k(k)$, $O_k(k-K)P_k(k)$ while displaced on the wave number space by only the spatial frequency K of the illumination pattern, thereby obtaining the image data $I_k(k)$ of the demodulated image of the sample 10. The concept of the processing of this step S4 is shown in Fig. 3(S4).

(step S5)

The control-calculating unit 13 subjects the image data $I_k(k)$ to inverse Fourier Transformation, thereby obtaining the image data $I_r(r)$. The concept of the processing of this step S5 is shown in Fig. 3(S5). The image data $I_r(r)$ represents the demodulated image of the sample 10 in the real space.

However, the super-resolved image of the sample 10 is projected on the image data $I_r(r)$ while being distorted. The reason is as follows.

The distortion correction of the step S1 is the distortion correction to eliminate the distortion of the illumination pattern on the image, that is, it is the combination of the distortion correction of the illuminating optical system LS1 and the distortion correction of the image-forming optical system LS2. On the other hand, the distortion of the sample 10 on the image is not related to the distortion aberration of the illuminating optical system LS 1, and it is induced by only the distortion aberration of the image-forming optical system LS2. Therefore, the distortion correction of the step S1 described above becomes "over-correction" by the amount corresponding to the distortion correction of the illuminating optical system LS1 with respect to the distortion of the sample 10.]

(step S6)

Therefore, the control-calculating unit 13 subjects the image data $I_r(r)$ to the coordinate conversion by using the following equation (4), and it is subjected to negative correction by the amount corresponding to the over-correction amount. This equation (4) represents the relationship between the coordinate $X_g$ on the grating 3 and the coordinate $X_s$ on the sample 10. By solving this equation for $X_g$, $X_g$ is determined as a function of $X_s$, and $X_g$ is calculated for equal-interval $X_s$, thereby performing the negative correction.

$$Xs = M_1(1 + a_1 X_g^2 + a_2 X_g^4 + a_3 X_g^6 + \dots) X_g \quad \dots (4)$$

The concept of the processing of the step S6 is shown in Fig. 3(S6). The super-resolved image of the sample 10 is projected onto the image data $I_r'(r)$ after the negative correction with no distortion.

The coefficients $M_1$, $a_1$, $a_2$, $a_3$, ... of the equation (4) are determined from at least one of the design data and the actual measurement data of the illuminating optical system LS1 in advance. As the number of the coefficients $a_1$, $a_2$, $a_3$, ... is larger, the correcting precision can be more enhanced. If the coefficients are limited to the two coefficients $a_1$, $a_2$, some degree of effect can be obtained. These coefficients are stored in the control-calculating unit 13 in advance.

Furthermore, when the coordinate conversion is carried out, the pixel interpolating procedure is preferably carried out so that the conversion error is as small as possible as occasion demands (step S6).

Next, the effect of the microscope apparatus will be described.

As described above, in the microscope apparatus, the distortion correction (step S1 of Fig. 2) is conducted on the plural image data $I_{rj}'$(j=1, 2, 3, ..., N) different in phase. The spatial frequencies of the illumination pattern are regarded as being uniform on the corrected image data $I_{rj}$(j=1, 2, 3, ..., N) (accordingly, the amount of phase change is regarded as being uniform).

Accordingly, in the microscope apparatus of this embodiment, if the distortion correction is carried out with high precision, the demodulating error hardly occurs in spite of use of only the simple calculation equation (equation (2) or equation (3)) for the demodulating calculation (steps S2 to S5 of Fig. 2), so that an excellent super-resolved image in which noise is suppressed can be obtained.

(others)

The image data of the demodulated image obtained in this embodiment contain not only the information of a pattern O of the sample 10, but also the information of the transfer function of the image-forming optical system LS2 (the information of a dot image distribution function of the image-forming optical system LS2). Therefore, the control-calculating unit 13 may subject the image data of the demodulated image to deconvolution to exclude the information of the transfer function as occasion demands.

However, the information of the distortion aberration of the image-forming optical system LS2 has been already excluded from the information of the image data of the demodulated image. Therefore, in the deconvolution, a function achieved by excluding the distortion aberration component of the image-forming optical system LS2 from the transfer function may be used in place of the transfer function. The super-resolved image of the sample 10 appears sharply on the image data after the deconvolution.

In the foregoing description, the kind of the sample 10 is not described, however, it may be a sample marked with fluorescent material. In this case, the half mirror 8 is replaced by a dichroic mirror, an excitation filter is inserted to the light source side of the dichroic mirror, and a barrier filter is inserted to a position nearer to the imaging unit 12 than the half mirror 8.

Furthermore, in the foregoing description, the direction of the super-resolved image is not described. However, if the information described above is obtained while the lattice direction of the grating 3 is fixed, a super-resolved image whose resolution is enhanced over the direction vertical to the lattice could be obtained. Furthermore, if the lattice direction of the grating 3 is changed to plural directions to obtain the same information, a super-resolved image whose resolution is enhanced over the plural directions. Furthermore, when a super-resolved image whose resolution is enhanced over the plural directions is obtained, the one-dimensional grating 3 may be replaced by a two-dimensional grating (a grating having a lattice formed in a grid shape). According to the two-dimensional grating, information in the two directions can be simultaneously formed.

Furthermore, in place of the demodulating calculation in the steps S2 to S5 of Fig. 2, another demodulating calculation which is established under the same assumption may be applied. For example, a demodulating calculation disclosed in the Japanese Unexamined Patent Application Publication No. Hei 1 1-242189 may be applied. According to the demodulating calculation disclosed in the Japanese Unexamined Patent Application Publication No. Hei 1 1-242189, the demodulating calculation of the steps S2 to S5 of Fig. 2 is carried out on the real space, and three image data different in phase are applied to a linear calculation equation. The calculation equation corresponds to the expression of the equation (2) on the real space.

According to the method disclosed in the Japanese Unexamined Patent Application Publication No. Hei 11-242189, the distortion correction in the demodulating calculation is not carried out, and thus the following distortion occurs in O(x)*P(x), O(x)*P_(x) in the Japanese Unexamined Patent Application Publication No. Hei 11-242189.

[Equation 2]

$$O(x)*P(x) = \frac{2}{3}(I_1 + I_2 + I_3) + \frac{2\pi x}{\sqrt{3}}\left((\Delta f_2 - \Delta f_3)I_1 + \Delta f_3 I_2 - \Delta f_2 I_3\right)$$

$$+ \frac{1}{\sqrt{3}}\left((\Delta\phi_2 - \Delta\phi_3)I_1 + \Delta\phi_3 I_2 - \Delta\phi_2 I_3\right)$$

$$O(x)*P_-(x) = \frac{2}{3c}(2I_1 - (1 + j\sqrt{3})I_2 - (1 - j\sqrt{3})I_3)\exp(2\pi j f_0 x)$$

$$-2\pi x\left(((1 - \frac{1}{\sqrt{3}})\Delta f_2 - (1 + \frac{1}{\sqrt{3}})\Delta f_3)I_1 + (1 + \frac{1}{\sqrt{3}}j)\Delta f_3 I_2 + (1 - \frac{1}{\sqrt{3}}j)\Delta f_2 I_3\right)$$

$$-((1 - \frac{1}{\sqrt{3}})\Delta\phi_2 - (1 + \frac{1}{\sqrt{3}})\Delta\phi_3)I_1 + (1 + \frac{1}{\sqrt{3}}j)\Delta\phi_3 I_2 + (1 - \frac{1}{\sqrt{3}}j)\Delta\phi_2 I_3$$

On the basis of $f_1 = f_0$, $\phi_1$, the following representations: $\Delta f_2 = f_2 - f_0$, $\Delta f_3 = f_3 - f_0$, $\Delta\phi_2 = \phi_2 - \phi_1$, $\Delta\phi_3 = \phi_3 - \phi_1$ are adopted, and the following approximations: $2\pi\Delta f_2 x$, $2\pi\Delta f_3 x \ll 1$, $\Delta\phi_2$, $\Delta\phi_3 \ll 1$ are adopted. Accordingly, according to the method of the Japanese Unexamined Patent Application Publication No. Hei 11-242189, a demodulating error caused by nonuniformity of the amount of phase change of the illumination pattern occurs mainly at the center portion of the image, and a demodulating error caused by nonuniformity of the spatial frequency of the illumination pattern occurs at the peripheral portion of the image. However, these demodulating errors do not occur according to this embodiment that carries out the distortion correction when the demodulating calculation is carried out.

## Claims

1.  A microscope apparatus comprising:

    an illuminating optical system that illuminates a sample with light from a light source;
    a modulating unit that is disposed in said illuminating optical system and spatially modulates the light from said light source;
    an image-forming optical system that forms a modulated image from said sample illuminated with said spatially modulated light;
    an imaging unit that picks up said modulated image;
    a correcting unit that corrects distortion of said modulated image due to at least one of said illuminating optical system and said image-forming optical system; and
    an image generating unit that generates an image of said sample from the modulated image corrected by said correcting unit.

2.  The microscope apparatus according to claim 1, wherein said modulating unit has a grating, and a grating modulating unit that modulates by moving said grating.

3.  The microscope apparatus according to claim 1 or 2, wherein said correcting unit carries out said correction on the basis of data of distortion aberration of at least one of said illuminating optical system and said image-forming optical system.

4.  The microscope apparatus according to claim 3, wherein said correcting unit carries out said correction on the basis of at least one of actual measurement data and design data of said distortion aberration.

5.  The microscope apparatus according to any one of claims 1 to 4, further comprising a recorrecting unit that corrects distortion of an image of said sample.

6. The microscope apparatus according to claim 5, wherein said recorrecting unit carries out said correction on the basis of the data of the distortion aberration of said image-forming optical system.

7. The microscope apparatus according to claim 6, wherein said recorrecting unit carries out said correction on the basis of at least one of actual data and design data of said distortion aberration.

8. An image generating method that generates a sample image through an image calculating procedure of an obtained image by illuminating a sample with spatially modulated illumination light, and forming an image of light from said sample illuminated with said illumination light, comprises:

a correcting step that corrects distortion of said obtained image due to an illuminating optical system and an image-forming optical system; and
an image generating step that generates an image of said sample from said corrected image.

[Fig. 1]

[Fig. 2]

```
                        ┌─────────────┐
                        │    START    │
                        └─────────────┘
                               │
                               ▼
                   ┌──────────────────────────┐
                   │  DISTORTION CORRECTION    │  (S1)
                   └──────────────────────────┘
                               │
                               ▼
               ┌──────────────────────────────────┐
               │  FOURIER TRANSFORMATION OF IMAGE  │  (S2)
               └──────────────────────────────────┘
                               │
                               ▼
                   ┌──────────────────────────┐
                   │   SEPARATION CALCULATION  │  (S3)
                   └──────────────────────────┘
                               │
                               ▼
                   ┌──────────────────────────┐
                   │   LATERAL DISPLACEMENT    │  (S4)
                   └──────────────────────────┘
                               │
                               ▼
               ┌──────────────────────────────────┐
               │   INVERSE FOURIER TRANSFORMATION  │  (S5)
               └──────────────────────────────────┘
                               │
                               ▼
                   ┌──────────────────────────┐
                   │    NEGATIVE CORRECTION    │  (S6)
                   └──────────────────────────┘
                               │
                               ▼
                        ┌─────────────┐
                        │     END     │
                        └─────────────┘
```

DEMODULATING CALCULATION

[Fig. 3]

(S1)

(S2)

(S3)

(S4)

(S5)

(S6)

<div align="center">

**INTERNATIONAL SEARCH REPORT**

</div>

| | International application No. |
|---|---|
| | PCT/JP2006/319717 |

**A.   CLASSIFICATION OF SUBJECT MATTER**
*G02B21/00*(2006.01)i, *G02B26/06*(2006.01)i, *G02B27/58*(2006.01)i

According to International Patent Classification (IPC) or to both national classification and IPC

**B.   FIELDS SEARCHED**

Minimum documentation searched (classification system followed by classification symbols)
G02B21/00, G02B26/06, G02B27/58

Documentation searched other than minimum documentation to the extent that such documents are included in the fields searched
Jitsuyo Shinan Koho        1922-1996   Jitsuyo Shinan Toroku Koho    1996-2006
Kokai Jitsuyo Shinan Koho   1971-2006   Toroku Jitsuyo Shinan Koho    1994-2006

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | JP 11-242189 A  (Olympus Optical Co., Ltd.), 07 September, 1999 (07.09.99), Full text; all drawings & US 6239909 B1 | 1-8 |
| Y | JP 2001-281554 A  (Nikon Corp.), 10 October, 2001 (10.10.01), Full text; all drawings & US 2001/0028391 A1     & DE 10114757 A1 | 1-8 |
| Y | JP 2001-274973 A  (Sanyo Electric Co., Ltd.), 05 October, 2001 (05.10.01), Full text; all drawings (Family: none) | 1-8 |

☐   Further documents are listed in the continuation of Box C.      ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 December, 2006 (26.12.06) | 09 January, 2007 (09.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11242189 B